# EUROPEAN PATENT APPLICATION

(11) **EP 2 059 075 A2**
(43) Date of publication of application: **13.05.2009**
(21) Application number: 08019091.1
(22) Date of filing: 31.10.2008
(51) Int. Cl.: H04W 4/02

(54) **Method and system for locating a lost and/or stolen phone based on supl network initiated, triggered by reverse-billed SMS**

(30) Priority: 12.11.2007 US 987236 P; 08.10.2008 US 247641
(71) Applicant: Broadcom Corporation, Irvine 92617 (US)
(72) Inventor: Castillo, Manuel del, 28016 Madrid (ES)
(74) Representative: Jehle, Volker Armin

(57) **Abstract**

A user and/or owner of a mobile terminal may access a password protected application that is enabled to determine a location of the mobile terminal. In this regard, the mobile terminal may receive a reverse billed SMS message from a communication device hosting a web server application. The reverse billed SMS message comprising a request for mobile terminal location may be authenticated by the mobile terminal. The mobile terminal may be billed for the SMS message. A response from the mobile terminal may comprise its location. A navigation satellite system receiver such as GPS and/or GLONASS and/or an assisted navigation satellite system receiver may be utilized to determine the mobile terminal location. In addition, cell ID, location ID and/or network mobile report (NMR) information may be utilized to determine the mobile terminal location.

## Description

### CROSS-REFERENCE TO RELATED APPLICATIONS/INCORPORATION BY REFERENCE

This application makes reference to and claims priority to United States Provisional Application Serial No. 60/987,236 filed on November 12, 2007.

The above stated application is hereby incorporated herein by reference in its entirety.

### FIELD OF THE INVENTION

Certain embodiments of the invention relate to communication systems. More specifically, certain embodiments of the invention relate to a method and system for locating a lost and/or stolen phone based on SUPL network initiated, triggered by reverse-billed SMS.

### BACKGROUND OF THE INVENTION

The market for location-based services (LBS) is potentially tremendous. One of the driving forces behind the LBS market is the integration of a satellite navigation receiver like a GPS receiver into a handset device such as a wireless mobile phone. The integrated GPS receiver has to quickly acquire a position fix and operate in harsh signal propagation environments with low power consumption. These requirements and the availability of various wireless connections themselves have triggered a solution called Assisted GPS (AGPS). AGPS uses assistance data to speed up the process of acquiring the position fix especially in a weak signal environment as compared to stand-alone GPS. At the same time, it may also reduce the consumption of the receiver resources (battery power and CPU time) by delegating some of the tasks to an external entity.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for locating a lost and/or stolen phone based on SUPL network initiated, triggered by reverse-billed SMS, substantially as shown in and/or described in connection with at least one of the figures, as set forth more completely in the claims.
According to an aspect, a method for device location comprises:
receiving by a mobile terminal, a reverse billed SMS message from a communication device, wherein said reverse billed SMS message requests a location of said mobile terminal and is billed to said mobile terminal;
generating a response to said received reverse billed SMS message comprising said location of said mobile terminal; and
communicating said generated response comprising said location of said mobile terminal to said communication device.
Advantageously, the method comprises authenticating said reverse billed SMS message by said mobile terminal.
Advantageously, the method comprises determining said location of said mobile device via a navigation satellite system receiver coupled to said mobile terminal.
Advantageously, the method comprises determining said location of said mobile device via assisted navigation satellite system receiver coupled to said mobile terminal.
Advantageously, said navigation satellite system receiver comprises a global positioning system and/or a GLONASS receiver.
Advantageously, said communication device comprises a web server.
Advantageously, said communication device comprises a wireless service provider operated device.
Advantageously, said mobile terminal communicates said generated response comprising said location of said mobile terminal to said communication device upon successful authentication of said received reverse billed SMS message.
Advantageously, the method comprises determining said location of said mobile terminal based on cell ID and/or location ID information of a base station serving said mobile terminal.
Advantageously, the method comprises determining said location of said mobile terminal based on network mobile report (NMR) information.
According to an aspect, a system for device location comprises:
one or more processors in a mobile terminal, wherein said one or more processors receives a reverse billed SMS message from a communication device, wherein said reverse billed SMS message requests a location of said mobile terminal and is billed to said mobile terminal;
said one or more processors generates a response to said received reverse billed SMS message, said response comprising said location of said mobile terminal; and
said one or more processors communicates said generated response comprising said location of said mobile terminal to said communication device.
Advantageously, said one or more processors are operable to authenticate said reverse billed SMS message by said mobile terminal.
Advantageously, said one or more processors are operable to determine said location of said mobile device via a navigation satellite system receiver coupled to said mobile terminal.
Advantageously, said one or more processors are operable to determine said location of said mobile device via assisted navigation satellite system receiver coupled to said mobile terminal.
Advantageously, said navigation satellite system receiver comprises a global positioning system and/or a GLONASS receiver.
Advantageously, said communication device comprises a web server.
Advantageously, said communication device comprises a wireless service provider operated device.
Advantageously, said mobile terminal communicates said generated response comprising said location of said mobile terminal to said communication device upon successful authentication of said received reverse billed SMS message.
Advantageously, said one or more processors are operable to determine said location of said mobile terminal based on cell ID and/or location ID information of a base station serving said mobile terminal.
Advantageously, said one or more processors are operable to determine said location of said mobile terminal based on network mobile report (NMR) information.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a diagram illustrating an exemplary geo-location system, in accordance with an embodiment of the invention.

FIG. 1B is an exemplary system for remotely triggering mobile terminal location retrieval with a reverse billed SMS message, in accordance with an embodiment of the invention.

FIG. 2 is a diagram illustrating an exemplary GPS enabled mobile terminal, in accordance with an embodiment of the invention.

FIG. 3 is a flow diagram illustrating an exemplary exchange for determining the location of a missing mobile terminal, in accordance with an embodiment of the invention.

### DETAILED DESCRIPTION OF THE INVENTION

Aspects of the invention may be found in a method and system for locating a lost and/or stolen phone based on SUPL network initiated, triggered by reverse-billed SMS. In various embodiments of the invention, a mobile terminal may receive a reverse billed SMS message from a communication device. The communication device may comprise a web server and/or a device that may be operated via a wireless service provider. The reverse billed SMS message may be authenticated by the mobile terminal and/or may comprise a request for the mobile terminal's location. In addition, the SMS message may be billed to the mobile terminal. For example, billing may go to a subscriber of the SMS service for the mobile phone and/or an owner of an account for the mobile terminal. The mobile terminal may generate a response to the SMS message that may comprise a location of the mobile terminal. In addition, the mobile terminal may communicate the response to the communication device. For example, the generated response may be communicated upon successful authentication of the reverse billed SMS message. The location of the mobile device may be determined utilizing a navigation satellite system receiver and/or an assisted navigation satellite system receiver that may be coupled to the mobile terminal. Accordingly, the navigation satellite system receiver may comprise, for example, a global positioning system (GPS) and/or a global navigation satellite system (GLONASS) receiver. In various embodiments of the invention, the mobile terminal location may be determined based on cell ID and/or location ID information from a serving base station. Moreover, network mobile report (NMR) information may be utilized to determine the mobile terminal location. In this manner, device location methods and/or systems may be implemented.

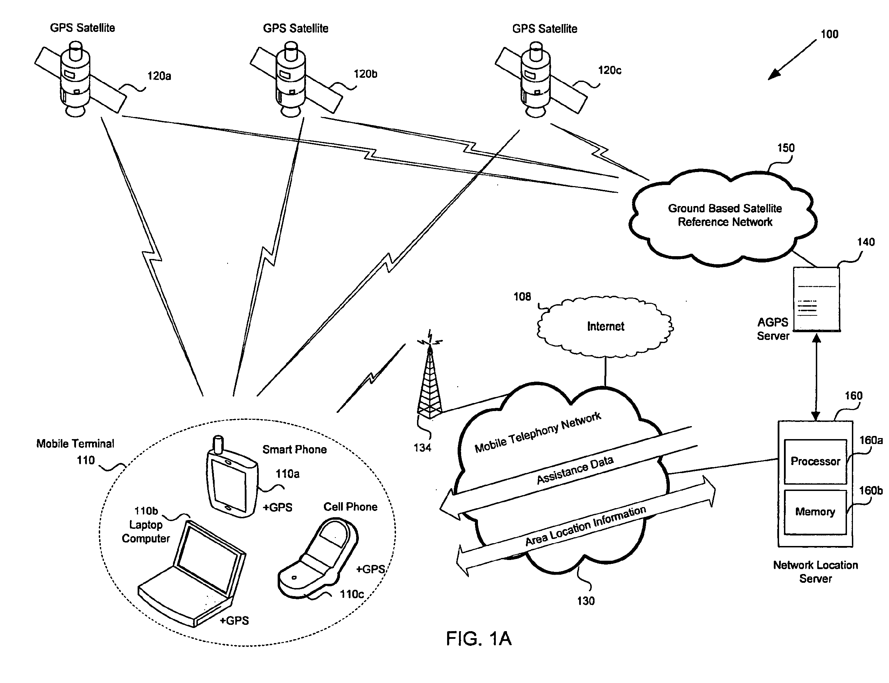

FIG. 1A is a diagram illustrating an exemplary geo-location system, in accordance with an embodiment of the invention. Referring to FIG. 1A, there is shown an assisted GPS (AGPS) satellite navigation system 100, comprising a mobile terminal 110, a plurality of satellites, of which satellites 120a, 120b, and 120c may be illustrated, a mobile telephony network 130, a cell site 134, an AGPS server 140, a ground based reference network 150 and a network location server 160. The network location server 160 may comprise a processor 160a and a memory 160b.

The mobile terminal 110 may comprise suitable logic circuitry and/or code that may be enabled to receive satellite transmission signals from the GPS satellites 120a through 120c in view to determine the position of the mobile terminal 110. Exemplary mobile terminals 110 may be the smart phone 110a, laptop computer 110b and/or the cell phone 110c. The mobile terminal 110 may be capable of transmitting and/or receiving radio signals to and/or from the mobile telephony network 130 via the cell site 134 based on one or more of a plurality of wireless technologies, for example, GSM, WCDMA, CDMA, UMTS, LTE and/or WIMAX. The mobile terminal 110 may initiate location determination and/or may respond to network initiated location determination requests, for example, requests received via a reverse billed and/or authenticated SMS message. The mobile terminal 110 may be capable of a plurality of location determination methods via, for example, location ID which may comprise cell-ID, RNC-ID and/or location area code, autonomous GPS, AGPS handset assisted, AGPS handset based, enhanced cell/sector, advanced forward link trilateration (AFLT), enhanced observed time difference (EOTD) and/or observed time difference of arrival (OTDOA). Although GPS is illustrated, the invention is not limited in this regard. Accordingly, other navigation satellite system such as GLONASS may be utilized without departing from the breadth and scope of the invention.

In instances when the mobile terminal 110 may receive a network initiated location request via an SMS message, it may authenticate the SMS message, determine its location and communicate its position to the entity that sent the network initiated location request. The invention is not limited to any specific method for determining the position of a mobile terminal and any suitable location method and/or location protocol may be utilized.

In accordance with an embodiment of the invention, the mobile terminal 110 may utilize AGPS and, for example, a SUPL interface to determine its location. In this regard, the mobile terminal may establish a data connection with the network location server 160 and exchange a plurality of location determination messages. In instances where the mobile terminal 110 is served by the cell site 134, location information sent from the mobile terminal 110 to the network location server 160 via the mobile telephony network 130, may comprise, for example, location ID information corresponding to the cell site 134 and/or various identifying information about the telephony network 130. For example, location ID information may comprise one or more of a Cell-ID for the serving cell site 134, an RNC-ID for a serving RNC, location area code (LAC), Mobile Network Code (MNC) of the mobile telephony network 130 and/or Mobile Country Code (MCC) of an associated country.

In addition, network mobile report (NMR) information which may comprise cell site IDs for handoff neighbors may be sent to the network location server 160. The received location ID and/or NMR information may be utilized by the network location server 160 to look up a reference position for retrieving assistance data from the AGPS server 140 as well as for coarse initial position determination calculations when more refined positioning may not be available or needed. In this regard, the AGPS server 140 may utilize the initial coarse mobile terminal 110 position to determine which satellites may be in the view of the mobile terminal 110 and additional ephemeris information. The ephemeris information may then be sent from the AGPS server 140 to the network server 160 and/or the mobile terminal 110. The received ephemeris information along with measurements of the GPS signal and GPS data may be utilized to determine the position of the mobile terminal 110. By utilizing current ephemeris information, the time to first fix may be dramatically reduced.

The GPS satellites 120a through 120c may comprise suitable logic, circuitry and/or code that may be enabled to generate and broadcast suitable radiofrequency signals. The broadcast RF signals may be received by a GPS satellite receiver integrated in the mobile terminal 110. The received broadcast RF signals may be utilized to determine navigation information comprising, for example, position, velocity, direction and/or time of the GPS enabled handset 110.

The mobile telephony network 130 may comprise suitable logic, circuitry and/or code that may be enabled to provide various voice and/or data services utilizing one or more of a plurality of wireless technologies, for example, WCDMA, Ethernet, GSM, UMTS, LTE, WiFi, or WiMAX and/or CDMA. The mobile telephony network 130 may be communicatively coupled with the mobile terminal 110, the network location server 160, the AGPS server 140, the ground based satellite reference system 150 as well as the Internet 108. The mobile telephony network 130 may support location determination of mobile terminals and/or location based services.

The AGPS server 140 may comprise suitable logic, circuitry and/or code that may enable access to a satellite reference network, for example, the ground based satellite reference network system 150, to collect GPS satellite data and track GPS constellations. In addition, the AGPS server 140 may be communicatively coupled with network location server 160. The AGPS server 140 may be enabled to generate assistance data, which may be communicated via the network location server 160 and mobile telephony network 130 to the mobile terminal 110, for example, the cell phone 110c to compute its location. In addition, the AGPS server 140 may be enabled to use Long Term Orbits (LTO™) to supply accurate ephemeris assistance data that may be valid for, for example, up to 10 days in the future. This may enable the benefits of AGPS technology to be realized by the mobile terminal 110 when it may temporarily be out of operator network range. The AGPS server 140 may support messaging in one or more exemplary formats compatible with mobile telephony networks such as GSM/UMTS, CDMA, EVDO and/or WiFi, and/or WiMAX. For example, the AGPS server 140 may be GSM/UMTS standard compliant by supporting messaging in RRLP format, PCAP interface and OMA SUPLv1.0.

The AGPS server 140 may be configured to communicate via either user-plane and/or control-plane connectivity with the network location server 160. The AGPS server 140 may receive the estimated location of the mobile terminal 110 from the network location server 160. In this regard, the AGPS server 140 may download assistance data such as ephemeris data for the current satellites in view based on the estimated location of the mobile terminal 110 and may generate assistance data accordingly. The mobile terminal 110 may upload its location information to the network location server 160 periodically and/or as needed to ensure that the location information provided to the AGPS server 140 may be up-to-date.

The ground based satellite reference network 150 may comprise suitable logic, circuitry and/or code that may be enabled to collect and distribute data for GPS satellites on a continuous basis. The ground based satellite reference network 150 may be communicatively coupled to the AGPS server 140 and a plurality of satellites comprising the GPS satellites 120a, 120b and/or 120c. The ground based satellite reference network 150 may comprise a plurality of GPS reference receivers to receive ephemeris data from the GPS satellites which may be utilized to provide assistance data for AGPS enabled devices such as the mobile terminal 110. The ground based satellite reference network 150 may ensure high levels of availability, reliability, and performance.

The network location server 160 may comprise suitable logic, circuitry and/or code that may be enabled to support location determination and/or communication for devices such as the mobile terminal 110. For example the network location server 160 may support handset initiated and/or network location determination as well as handset based and/or handset assisted location determination. The location server 160 may communicate via user plane and/or control plane methods with the mobile terminal 110 and/or the AGPS server 140. For example, the location server 160 may communicate with the mobile terminal 110 utilizing user plane methods via a wireless packet data network or SMS and may utilize various positioning protocols such radio resource location services positioning (RRLP), radio resource control (RRC) and/or TIA 801 during determination of mobile terminal 110 location. Moreover, the location server 160 may communicate with the mobile terminal 110 utilizing control plane methods via circuit switched and/or packet switched wireless signaling.

The processor 160a may comprise suitable logic, circuitry and/or code to support various positioning methods, for example, based on an AGPS. In addition, the processor 160a may support Cell-ID, Enhanced Cell/Sector, autonomous GPS, Advanced Forward Link Trilateration (AFLT), and Time Difference of Arrival (TDOA). The processor 160a may be enabled to convert a location ID received from a mobile terminal 110 comprising for example, a serving cell-ID, location area code, RNC-ID, MNC and/or MCC to an estimated coarse location for the mobile terminal 110. For example, an estimated location based on a cell ID associated with the cell site 134, may comprise latitude, longitude and/or uncertainty corresponding to a geographical area served by the cell site 134. This estimated location area may be refined based on information from a network mobile report (NMR) that may comprise handoff neighbor cell site, cell IDs. In this regard, the processor 160a may maintain a data base within the memory 160b. The data base may comprise estimated location information for a plurality of cell sites, location area codes and/or RNCs. In this manner, the network location server 160 may provide a rough estimate of the location of a mobile terminal for retrieving AGPS data and/or for when AGPS may not be available or needed. For example, in instances where the network location server 160 may receive a message comprising a cell-ID from the mobile terminal 110, the processor 160a may be enabled to determine that the current position of the mobile terminal 110 may be somewhere in a serving area associated with the received cell-ID.

The memory 160b may comprise suitable logic, circuitry, and/or code that may enable storing information such as a database utilized for storing location information, executable instructions and/or other data that may be utilized by the processor 160a. The executable instructions may comprise algorithms that may be enabled to calculate navigation information using the acquired satellite signals automatically or upon request. The data may comprise various latitude and longitude (LAT/LON) data and/or uncertainty of a plurality mobile telephony network 130 elements and/or communication devices associated with the network location server 160. The memory 160b may comprise RAM, ROM, low latency nonvolatile memory such as flash memory and/or other suitable electronic data storage.

The network location server 160 may be enabled to connect to the AGPS server 140 to acquire AGPS assistance data and transmit the acquired AGPS assistance data to one or more mobile terminals such as the mobile terminal 110 to implement the AGPS technique. Communications among the network location server 160, the AGPS server 140, and/or the mobile terminal 110 may be in either user-plane or control-plane via various technologies, whether wireless or wired.

In operation, a mobile terminal 110 may receive a reverse billed SMS message from an application hosted by a network entity, comprising a request for the mobile terminal 110's location. The requesting application may be a web based application and may be enabled to request and/or receive the location of missing mobile terminals. The mobile terminal 110 may authenticate the received SMS message, may determine its location and may return its location information to the requesting application. The mobile terminal 110 may utilize one or more of a plurality of location determination methods and/or location protocols to determine its location. For example, the mobile terminal 110 may utilize AGPS and SUPL messaging and/or RRLP, RRC and/or TIA-801. In this regard, upon receiving the network initiated request for location via the reverse billed SMS message, the mobile terminal 110 may authenticate the SMS message and/or the user that launched the SMS message.

In instances where the authentication is successful, the mobile may establish a data session with the network server 160 and may send the network server its current location ID. The network server 160 may determine a coarse initial position for the mobile terminal 110 based on cell-ID and/or other information and may forward the coarse initial position to the AGPS server 140. The AGPS server 140 may return current ephemeris and/or almanac data to the network server and/or mobile terminal 110. The mobile terminal 110 and/or location server 160 may determine a finer location and the mobile terminal 110 may send the determined location to the original requesting application. In instances when AGPS and/or GPS data may not be needed and/or the quality of position may not indicate the need for a finer position. The mobile terminal 110 may return a location based on the coarse initial position. In various embodiments of the invention, the mobile may store long term orbit information and may be prepared to determine an AGPS location without additional communication with the network location server and/or AGPS server 140.

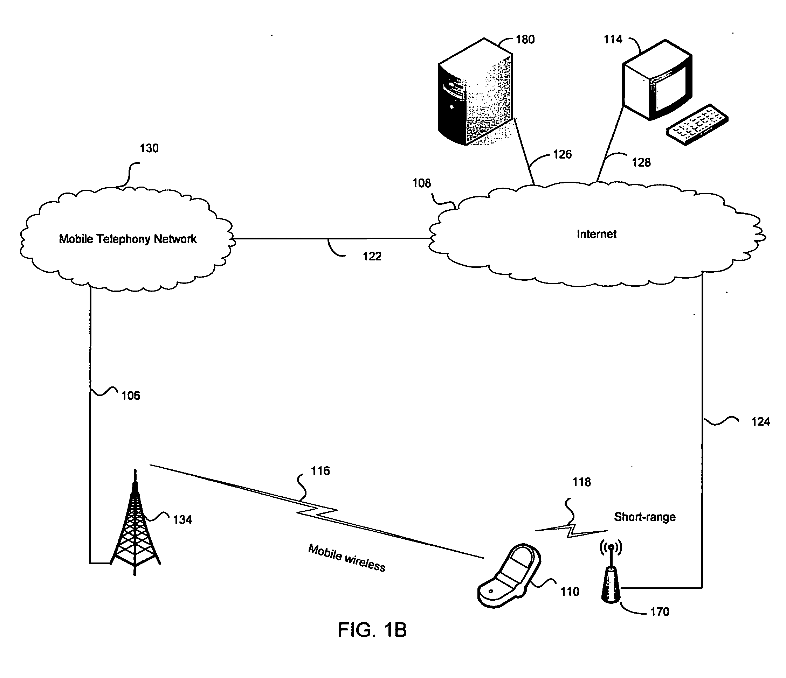

FIG. 1B is an exemplary system for remotely triggering mobile terminal location retrieval with a reverse billed SMS message, in accordance with an embodiment of the invention. Referring to FIG. 1B, there is shown a mobile terminal 110, a cell site 134, a mobile telephony network 130, the Internet 108, an access point 170, a server 180, and a user terminal 114. There is also shown a mobile wireless connection 116, a short-range wireless connection 118, and a plurality of data links 106, 122, 124, 126, and 128.

The mobile terminal 110 may be similar and/or substantially the same as one of the mobile terminals 110 described with respect to FIG. 1A. The mobile terminal 110 may be communicatively coupled to a cell site 134. The mobile terminal 110 may comprise suitable logic, circuitry and/or code that may be enabled to use a mobile wireless link 116 to transmit and receive data to and from the cell site 134.

The cell site 134 may be similar or substantially the same as the cell site 134 described in FIG. 1A. The cell site 134 may be part of a cellular mobile telephony network 130, for example, a network compliant with one or more mobile telephony standard, for example, UMTS, GSM, CMDA2000, and others. The cell site 134 may comprise suitable logic, circuitry and/or code that may be enabled to receive and transmit data from and to the mobile terminal 110 via a mobile wireless link 116, and to forward data to and from the mobile telephony network 130 via, for example, the data link 106.

The mobile telephony network 130 may be similar or substantially the same as the mobile telephone network 130 described in FIG. 1A. The mobile telephony network 130 may comprise suitable logic, circuitry and/or code that may be enabled to control communication with a plurality of mobile terminals and network nodes within the mobile telephony network 130 as well as nodes in other networks. The mobile telephony network 130 may be communicatively coupled to the Internet 108.

The Internet 108 may comprise suitable logic, circuitry and/or code that may enable communication between various nodes connected to it. For example, the user terminal 114, the server 180, and the access point 170 may be communicatively coupled to the Internet via data links 128, 126 and 124, respectively. In some instances, the data links 106, 122, 124, 126 and 128 may not be direct data links but may comprise one or more networks.

The access point 170 may comprise suitable logic, circuitry, and/or code that may be enabled to communicate wirelessly with other devices, for example the mobile terminal 110. In some instances, the access point 170 may be a Bluetooth or a Wireless Local Area Network (WLAN) access point. However, the access point 170 may not be limited to any specific wireless technology.

The server 180 may comprise suitable logic, circuitry and/or code that may be enabled to communicate with other nodes connected to the Internet and/or other networks. For example, the server 180 may comprise a web server that may interact, for example, with user terminals similar to the user terminal 114. The server 180 may host a web application enabled to send an authenticated, reverse billed SMS message to the mobile terminal 110 to request a location of the mobile terminal 110 and receive a location response. With regard to reverse billing, the receiver of the SMS message may pay for the SMS message. For example, an operator of the mobile telephony network 130 may bill the user of the mobile terminal 110 for receiving the reverse billed SMS message that requests a location of the mobile terminal 110.

The web application hosted by the server 180 may enforce secure communication procedures for location of the mobile terminal 110. For example, a user may be required to establish an account and/or set up a user name and/or password prior to accessing a location determination service for the user's mobile terminal 110. In addition, SMS messages sent to the mobile terminal 110 that request its location, may be authenticated by the mobile terminal 110. In addition, the web application may be enabled to present the location of the mobile terminal 110 to a user in one or more ways. For example, the location and/or uncertainty may be graphically mapped and presented to the user via a user interface at the user terminal 114. The web application and/or a service for locating a user's and/or owner's mobile terminal via the server 180 may be offered to the user by a service provider or the manufacturer of the mobile terminal 110 for example. In various embodiments of the invention the application for sending a location request to the mobile terminal 110 via a reverse billed, authenticated SMS message may reside on the user terminal 114.

The user terminal 114 may comprise suitable logic, circuitry and/or code that may be enabled to communicate with other terminals, servers and other nodes that may be connected to a network, for example the Internet 108. The user terminal 114 may be, for example, a personal computer, laptop or handheld device. In various embodiments of the invention, the user terminal 114 may be utilized to access a web application hosted by the server 180 wherein the hosted the application may be enabled to send an authenticated, reverse billed SMS message to the mobile terminal 110 to request a location of the mobile terminal 110. A user of the user terminal 114 may provide a user name and password to enable secure location determination of the mobile terminal 110. The user terminal 114 may present the location results to the user. In various embodiments of the invention the application for sending a location request to the mobile terminal 110 via a reverse billed, authenticated SMS message and presenting location results, may reside on the user terminal 114.

In operation, the user and/or owner of the mobile terminal 110 may lose or misplace the mobile terminal 110 and/or may become unaware of its physical location. In accordance with various embodiments of the invention, the physical location of the lost mobile terminal 110 may be determined. For example, the user and/or owner may request, via a remote user terminal 114 and/or the server 180, that an SMS message be sent to the mobile terminal 110 to initiate mobile location determination for the mobile terminal 110. For example, an application hosted by the server 180 may send a binary SMS message to the mobile terminal 110 requesting a response comprising its location and/or uncertainty. In some instances, the mobile terminal may determine and/or return its own location. Alternatively, the mobile terminal 110 may initiate a data session with the network location server 160 described with respect to FIG. 1A and a SUPL location determination call flow may follow. Upon receipt of the SMS message, the message and/or request of location may be authenticated by the mobile terminal 110. Moreover, the SMS sent to the mobile terminal 110 may be reverse billed to the owner and/or user of the mobile terminal 110. The mobile terminal 110 and/or the network location server 160 may determine the mobile terminal 110's position and may respond to the request for mobile location determination with the mobile terminal 110's position via the user terminal 114.

In various embodiments of the invention, a mobile terminal manufacturer and/or another service entity may provide a service to locate misplaced, lost or stolen mobile terminals. The manufacturer and/or service entity may operate the server 180 and/or provide the application for requesting location determination of the missing mobile terminals, for example, the mobile terminal 110. In this regard, at the time of purchase of the mobile terminal 110 and/or prior to use of the location service for mobile terminals, the user and/or owner of the mobile terminal 110 may be required to set up an account or another form of a client and/or customer relationship with the manufacturer and/or the mobile terminal location service. In this manner, the user and/or owner of the mobile terminal 110 may establish authorization to request location determination via reverse billed SMS messages to the mobile terminal 110 and/or receive a determined location response from the mobile terminal 110. In an exemplary embodiment of the invention, the owner and/or user of the mobile terminal 110 may, for example, access an application via the user terminal 114, for example, an application hosted by the server 180, to send an SMS message to the mobile terminal 110 via the Internet 108 and/or the mobile telephony network 130.

In various embodiments of the invention, the server 180 and/or an application for requesting mobile terminal location determination may be operated by the manufacturer of the mobile terminal 110 and/or by an entity providing a service to locate misplaced mobiles. For example, a mobile terminal manufacturer, for example, may offer a mobile terminal location service to the owners and/or users of its products. The owner and/or user of the mobile terminal 110 may, for example, register with the manufacturer of the mobile terminal 110 for a mobile terminal location service. For example, the user may set up a user account that may identify his or her mobile terminal by, for example, its phone number, its International Mobile Equipment Identification (IMEI) number, and/or another means of identifying a particular mobile terminal with its owner and/or user. For at least privacy reasons, an authentication process may be required for before the mobile terminal 110 may provide its location. At least part of the registration and authentication process may occur with the mobile terminal 110, for example via the data link or the short message service (SMS) message.

In accordance with an embodiment of the invention, prior to misplacing the mobile terminal 110, a mobile terminal 110 owner may be required to send, for example, a pass code from his or her mobile terminal 110 to the server 180 to be utilized during future authentication operations. In accordance with another embodiment of the invention, the owner may need to enter, for example, a pass code that may be received on the mobile terminal 110 from the server 180 via the user terminal 114, to confirm rightful possession of the mobile terminal 110 to the server 180. In some instances, the use of the mobile terminal 110, for example via SMS messages, may be required to signal that the owner of the mobile terminal 110 may accept receipt of reverse-billed data messages from the server 180, as may be described below.

In instances where the owner of the mobile terminal 110 may misplace the mobile terminal 110, he or she may access the previously set up account at the server 180, for example, via the user terminal 114. Since the owner of the mobile terminal 110 may have previously set up an account and authenticated himself, the server 180 may recognize the owner of the mobile terminal and initiate location retrieval service. In these instances, the server 180 may send a data message to the mobile terminal 110. For example, the data message may comprise a reverse billed binary push SMS message, or Wireless Application Protocol (WAP) push message, for example. Push SMS messages, for example, may be defined by the Secure User Plane Location (SUPL) standard, which may be a part of Open Mobile Alliance (OMA) standards. The message sent by the server 180 to initiate a location search may be sent to the mobile terminal 110 via the Internet 108, the mobile telephony network 130, and the cell site 134, for example. Based on, for example, the mobile terminal's number, the mobile telephony network 130 may be able to forward a message from the server 180 to the mobile terminal 110. In these instances, the message to initiate the location retrieval service may comprise a request for the location of the mobile terminal 110, and specific instructions for the mobile terminal 110 on how to establish a direct data link to the server 180. The WAP push or the binary push SMS message to initialize the location transmission to the server 180 may be authenticated by the mobile terminal 110, in order to reduce illegitimate location retrieval requests.

In some instances, the mobile terminal 110 may comprise suitable logic, circuitry and/or code that may be enabled to authenticate the server 180. For example, this may be achieved by a security certificate that may have been embedded in the mobile terminal 110 by the manufacturer, for example. The security certificate may be hardwired into the chip and/or programmed by the mobile terminal manufacturer. In other exemplary embodiments, the phone location retrieval service may have been activated to permit location requests from the server 180 at the time the account was set up by the owner and/or user of the mobile terminal 110, for example by SMS authentication. In these instances, the mobile terminal 110 user and/or owner may be reverse billed for the location retrieval service by the mobile telephony service provider for example on his or her own account. This may permit sharing of revenue from the location retrieval service between the mobile telephony network 130 operator and the entity providing the missing mobile terminal service.

In response to the location retrieval request that may be received by the mobile terminal 110, the mobile terminal 110 may initiate a data connection to the network location server 160 described with respect to FIG. 1A. A data connection may be initialized over any available data connection, for example via the mobile wireless link 116 and the mobile telephony network 130 or via a short-range link 118, the access point 170, and the Internet 108. The mobile terminal 110 and/or the network location server 160 may determine a location and/or uncertainty for the mobile terminal 110 and may return the determined location and/or uncertainty to the server 180. The server 180 may, for example, format the received data and present it to the owner of the mobile terminal 110 at the terminal 114, for example. In accordance with one embodiment of the invention, the server 180 may provide a graphical depiction of the mobile terminal 110 location via an electronic map to the owner at the user terminal 114.

The location of the mobile terminal 110 may be determined through any available positioning method. For example, the mobile terminal 110 may be equipped with a Global Position System (GPS) chip, or an Assisted GPS (AGPS) chip that may comprise suitable logic, circuitry and/or code that may be enabled to receive a plurality of satellite signals and/or mobile wireless signal that may allow a determination of the mobile terminal location. In other instances, triangulation from cell sites in the wireless network may be utilized to locate the mobile terminal 110. In various embodiments of the invention, when GPS and/or AGPS are not available for determining a mobile terminal location and/or may not be required, other location methods may be utilized. For example, a SUPL interface may enable various alternative methods utilizing location ID information. The location ID information may comprise one or more of cell-ID, location area code (LAC), RNC-ID, mobile country code (MCC) and/or mobile network code (MNC). The network server 160 may provide locations associated with one or more elements of the location ID. For example, the network server 160 may comprise a database that may comprise associated cell-IDs and cell site latitudes and longitudes that may provide a coarse estimate of the mobile terminal 110. Moreover, network mobile reports (NMR) may provide additional information. In this regard, handoff neighbor lists or reports for a specified cell-ID may indicate a more refined position for the mobile terminal 110 by indicating a plurality of cell sites near the mobile terminal 110. In accordance with various embodiments of the invention, the invention may not be restricted to specific location determination techniques.

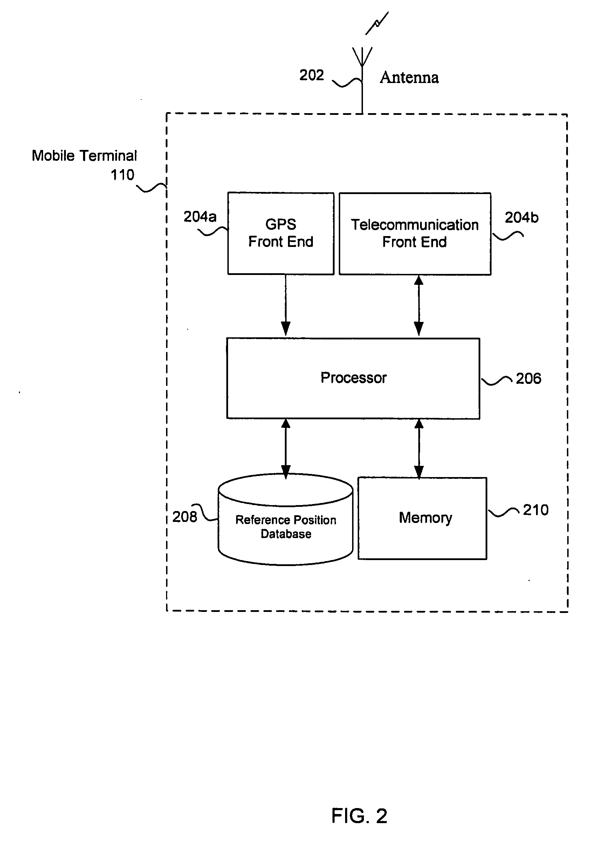

FIG. 2 is a diagram illustrating an exemplary GPS enabled mobile terminal, in accordance with an embodiment of the invention. Referring to FIG. 2, there is shown the GPS enabled mobile terminal 110 comprising an antenna 202, a GPS front end 204a, a telecommunication front end 204b, a processor 206, a reference position database 208, and a memory 210.

The antenna 202 may comprise suitable logic, circuitry and/or code that may be enabled to receive L band signals from a plurality of GPS satellites such as the GPS satellites 120a through 120c and may be capable of transmitting and/or receiving radio signals over, for example, the Bluetooth radio communication system, for communications among Bluetooth devices.

The GPS front end 204a may comprise suitable logic, circuitry and/or code that may be enabled to receive GPS satellite broadcast signals via the antenna 202 and convert them to GPS baseband signals, which may be suitable for further processing in the processor 206 for a navigation solution, whether GPS based or AGPS based.

The telecommunication front end 204b may comprise suitable logic, circuitry and/or code that may be enabled to transmit and/or receive radio signals over a telecommunication network such as a Bluetooth network via the antenna 202 and convert them to corresponding baseband signals, which may be suitable for further processing in the processor 206.

The processor 206 may comprise suitable logic, circuitry and/or code that may be enabled to process received satellite signals as well as signals received from a telecommunication network. The processor 206 may be configured to extract navigational information from each received satellite signal to compute a position for the GPS enabled handset 110. The processor 206 may be programmed to calculate the position by using local GPS measurements, AGPS assistance data and/or location ID information. When LTO AGPS assistance data may be available, the processor 206 may be enabled to calculate reference positions for GPS calculations based on the LTO AGPS assistance data and previous reference positions stored inside the GPS enabled handset 110.

The reference position database 208 may comprise suitable logic, circuitry, and/or code that may be operable to manage and store data comprising reference positions. The contents in the reference position database 208 may be used as reference positions for GPS calculations of the GPS enabled handset 110. The contents in the reference position database 208 may be updated as a needed base or periodically.

The memory 210 may comprise suitable logic, circuitry, and/or code that may enable storing of information such as executable instructions and data that may be utilized by the processor 206. The executable instructions may comprise algorithms that may be enabled to calculate a position using local GPS measurements or combined with the LTO AGPS assistance data from the AGPS server 140. The data may comprise local GPS measurements and LTO AGPS assistance data. The local GPS measurements may be associated with the satellite signals directly received from the GPS satellite 120a through 120c. The LTO AGPS assistance data may be from AGPS server 140 and received through the telecommunication front end 204b via the mobile telephony network 130. The memory 210 may comprise RAM, ROM, low latency nonvolatile memory such as flash memory and/or other suitable electronic data storage.

In operation, a user and/or owner of the mobile terminal 110 may lose or misplace the mobile terminal 110 and the physical location of the lost mobile terminal 110 may be determined. For example, a reverse billed SMS message may be sent to the mobile terminal 110 to initiate mobile location determination. The mobile terminal 110 may authenticate the SMS message and/or user that launched the message and may determine and/or return its own location. In this regard, a plurality of signals may be received at the antenna 202, which is coupled to the GPS enabled handset 110. The received plurality of signals may be measured and communicated to the GPS front end 204a or the telecommunication front end 204b, respectively, depending on the type of received signals. The GPS front end 204a may convert the received GPS signals into corresponding baseband signals and pass to the processor 206. The telecommunication front end 204b may convert the received telecommunication signals into corresponding baseband signals and pass to the processor 206. The received telecommunication signals may comprise AGPS assistance data from the AGPS server 140. The received AGPS assistance data may be stored in the memory 210. In instances where the user of the mobile terminal 110 may need to calculate its position, the processor 206 may be enabled to access the contents in the reference position database 208, and determine a position of the GPS enabled handset 110 based on the AGPS assistance data stored in the memory 210, and the local GPS measurements from the GPS front end 204a. The processor 206 may be operable to store and update information on reference positions into the reference position database 208. The reference positions may be obtained via the mobile telephony network 130, or may be calculated by the processor 206. The processor 206 may use various algorithms to calculate reference positions for the GPS enabled handset 110 by combining the AGPS assistance data with previous reference positions stored in the reference position database 208.

In an exemplary embodiment of the invention, the mobile terminal 110 may communicate with the network location server 160 via a wireless packet data network or via SMS and may utilize various positioning protocols such as RRLP, RRC and/or TIA 801. Moreover, the mobile terminal 110 may communicate with the location server 160 utilizing control plane methods via circuit switched and/or packet switched wireless signaling. In various embodiments of the invention, the mobile terminal 110 may provide a location ID to the network location server 160 as a parameter in a user plane or control plane position determination interface. For example, for a location user plane (Lup) location determination interface, the mobile terminal 110 may provide a location ID comprising Cell ID, location area code, mobile country code (MCC), mobile network code (MNC) and/or UTRAN cell identity (UC-ID) which may be composed of RNC-ID and C-ID. In addition, the mobile terminal 110 may send a determined position to the network location server 160. The determined handset position and corresponding RNC-ID provided to the network location server 160 may be utilized to determine an estimated coarse initial position and/or may be utilized to retrieve AGPS data.

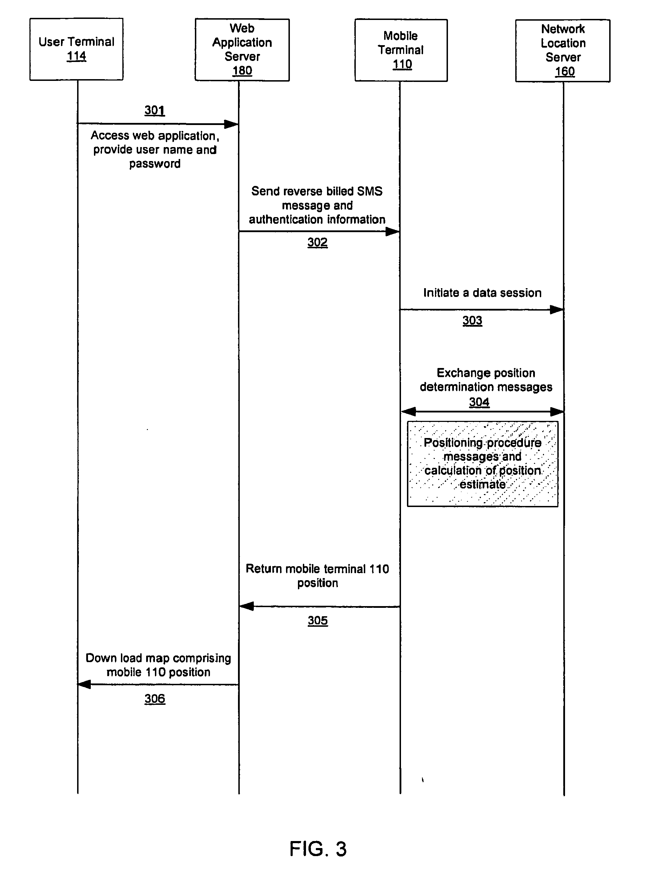

FIG. 3 is a flow diagram illustrating an exemplary exchange for determining the location of a missing mobile terminal, in accordance with an embodiment of the invention. Referring to FIG. 3, there is shown the user terminal 114, the server 180 comprising a web application for finding missing mobile terminals, the mobile terminal 110 and the network location server 160.

In step 301, a user of the mobile terminal 110 may utilize the user terminal 114 to access a web application for finding missing mobile terminals on the server 180. The user may enter a user name and/or password to authorize the location determination of the mobile terminal 110. In step 302, the web application on the server 180 may send a reverse billed SMS message wth authentication information to the mobile termnial 110 requesting that the mobile terminal 110 respond with its location. In step 303, the mobile terminal 110 may authenticate the server 180 SMS request and may establish a data connection with the network location server 160. In step 304, the mobile terminal 110 and the location server 160 may exchange position determination messages and may determine a position for the mobile terminal 110. In step 305, the mobile terminal 110 may return a position to the web application on the server 180. In step 306 the web application may format the returned position information and/or may create a map indicating the location of the mobile terminal 110. The server 180 may download the map and/or mobile terminal 110 to the user terminal 114.

In an exemplary embodiment of the invention, a server 180 may send a reverse billed SMS message to a mobile terminal 110 wherein the reverse billed SMS message may comprise a request for a location of the mobile terminal 110. The mobile terminal 110 may respond and provide its location. The reverse billed SMS message may be authenticated by the mobile terminal 110. In addition, a receiver of the SMS message which may be the owner and/or user of the mobile terminal 110, may be billed for the SMS message. The reverse billed SMS message may be launched by a web application on the server 180 and or a user terminal 114 application. For example, a user and/or owner of the mobile terminal 110 may establish an account and/or customer relationship with the web application operator and/or user terminal application vendor. The web application on the server 180 and/or user terminal 114 application may provide a secure service for locating missing mobile terminals. Accordingly, password protection may be enforced by the web application prior to sending the reverse billed SMS message that requests the location of the mobile terminal 110. In instances where the reverse SMS message is successfully authenticated by the mobile terminal 110, the mobile terminal 110 may determine its location by one or more available methods. For example, location determination may be based on one or more of GPS and/or satellite information, assisted GPS (AGPS), cell-ID and/or location ID information and/or network mobile report (NMR) information.

In various exemplary embodiments of the invention, a mobile terminal 110 may receive a reverse billed SMS message from a communication device, for example, the server 180 described with respect to FIG. 2. The communication device 180 may comprise a web server and/or a device that may be operated via a wireless service provider. The reverse billed SMS message may be authenticated by the mobile terminal 110 and/or may comprise a request for the mobile terminal 110's location. In addition, the SMS message may be billed to the mobile terminal 110. For example, billing may go to a subscriber of SMS service for the mobile phone 110 and/or an owner of an account for the mobile terminal. The mobile terminal 110 may generate a response to the SMS message that may comprise the mobile terminal 110's location. In addition, the mobile terminal 110 may communicate the response to the communication device 180. For example, the generated response may be communicated upon successful authentication of the reverse billed SMS message. The location of the mobile terminal 110 may be determined utilizing a navigation satellite system receiver such as the GPS front end 204a and/or an assisted navigation satellite system receiver 150 and/or server 140 that may be coupled to the mobile terminal. Accordingly, the navigation satellite system receiver 204a may comprise, for example, a global positioning system (GPS) and/or a global navigation satellite system (GLONASS) receiver. In various embodiments of the invention, the mobile terminal location may be determined based on cell ID and/or location ID information from a serving base station 134. Moreover, network mobile report (NMR) information may be utilized to determine the mobile terminal 110 location.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for locating a lost and/or stolen phone based on SUPL network initiated, triggered by reverse-billed SMS.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for device location, the method comprising:
receiving by a mobile terminal, a reverse billed SMS message from a communication device, wherein said reverse billed SMS message requests a location of said mobile terminal and is billed to said mobile terminal;
generating a response to said received reverse billed SMS message comprising said location of said mobile terminal; and
communicating said generated response comprising said location of said mobile terminal to said communication device.

2. The method according to claim 1, comprising authenticating said reverse billed SMS message by said mobile terminal.

3. The method according to claim 1, comprising determining said location of said mobile device via a navigation satellite system receiver coupled to said mobile terminal.

4. The method according to claim 3, comprising determining said location of said mobile device via assisted navigation satellite system receiver coupled to said mobile terminal.

5. The method according to claim 4, wherein said navigation satellite system receiver comprises a global positioning system and/or a GLONASS receiver.

6. The method according to claim 1, wherein said communication device comprises a web server.

7. A system for device location, the system comprising:
one or more processors in a mobile terminal, wherein said one or more processors receives a reverse billed SMS message from a communication device, wherein said reverse billed SMS message requests a location of said mobile terminal and is billed to said mobile terminal;
said one or more processors generates a response to said received reverse billed SMS message, said response comprising said location of said mobile terminal; and
said one or more processors communicates said generated response comprising said location of said mobile terminal to said communication device.

8. The system according to claim 7, wherein said one or more processors are operable to authenticate said reverse billed SMS message by said mobile terminal.

9. The system according to claim 7 wherein said one or more processors are operable to determine said location of said mobile device via a navigation satellite system receiver coupled to said mobile terminal.

10. The system according to claim 9, wherein said one or more processors are operable to determine said location of said mobile device via assisted navigation satellite system receiver coupled to said mobile terminal.
